# FASCICULE DE BREVET EUROPEEN

(11) **EP 0 682 973 B1**
(45) Date de publication et mention de la délivrance du brevet: **19.08.1998**
(21) Numéro de dépôt: 94401144.4
(22) Date de dépôt: 19.05.1994
(51) Int. Cl.: B01D 53/86

(54) **Procédé de désodorisation catalytique et de réduction de la teneur en azote des effluents de cuve à lisier**
Verfahren zur katalytischen Desodorisierung und zur Reduktion des Stickstoffgehaltes von Abgasen aus einem Güllegefäss
Process for the catalytic deodorising and reduction of the nitrogen content of the exhaust from a manure vessel

(43) Date de publication de la demande: 22.11.1995
(73) Titulaire: INSTITUT FRANCAIS DU PETROLE, 92502 Rueil-Malmaison (FR)
(72) Inventeur: Morlec, Jean, F-44600 Saint Nazaire (FR); Le Page, Jean-François, F-92500 Rueil Malmaison (FR)

(56) Documents cités:
- EP-A- 0 218 574
- EP-A- 0 290 947
- EP-A- 0 292 310
- EP-A- 0 404 958
- EP-A- 0 488 331
- DATABASE WPI Week 9025, Derwent Publications Ltd., London, GB; AN 90-189451 & JP-A-2 124 162 (MATSUSHITA) 11 Mai 1990

## Description

La présente invention concerne un procédé de traitement des matières organiques en fermentation et plus particulièrement les lisiers de porcs qui contiennent des produits soufrés et azotés malodorants. La présence de ces produits plus ou moins volatils posent à l'épandage des problèmes d'environnement : problèmes liés aux odeurs et problèmes liés à l'apport soudain de produits azotés dont l'ammoniaque qui participent à la pollution des eaux de surface et de la nappe phréatique.

L'invention concerne un procédé permettant au niveau de la fosse de rétention l'élimination chimique des composés les plus malodorants, le strippage à l'air d'une fraction des composés organiques les plus volatils et de l'ammoniac, la combustion des produits strippés et la transformation de l'ammoniaque et oxydes d'azote provenant de la combustion en azote moléculaire : il s'agit donc principalement d'une déodorisation catalytique (DEOCAT®).

Parmi les composés les plus malodorants de ce milieu on compte les mercaptans et plus particulièrement les mercaptans légers ; leur oxydation sous forme de sels sodiques ou de préférence potassiques permet de les transformer en disulfures dont le seuil de reconnaissance exprimé en volume par million est bien plus élevé et qui présentent l'avantage d'être bien moins volatils. L'apport d'oxygène s'opère par un lent barbotage d'air dans le milieu liquide préalablement additionné d'une base forte, la potasse de préférence qui permet d'apporter au mélange un élément fertilisant complémentaire. Cette oxydation qui peut être catalysée par divers types d'agents actifs soit organiques, tels les composés de la famille des tanins, soit organométalliques du type chélates parmi lesquels les phtalocyanines des métaux de transition, soit même minéraux, telle la sodalite à forte teneur en radicaux soufre connue dans le commerce sous le vocable de bleu d'outre-mer. Ces catalyseurs peuvent être utilisés soit sous forme soluble dans l'eau, soit sous forme de poudres en suspension, tel le bleu d'outre-mer pulvérulent. Pour les composés organiques ou organométalliques non solubles supportés, le support recommandé est le charbon activé.

L'air de barbotage utilisé pour l'oxydation entraîne hors du stockage une quantité plus ou moins importante de composés volatils dont l'ammoniac. Dans une seconde étape, selon l'invention, cet air chargé en ammoniac et en composés organiques volatils (C.O.V). passe en partie sur un catalyseur de combustion où les C.O.V. sont transformés pour l'essentiel en gaz carbonique, l'ammoniac en oxyde d'azote et le soufre des composés sulfurés en SO2.

Dans une étape de finition, les oxydes d'azote sont réduits en azote moléculaire par action de l'ammoniac soit sur un catalyseur à base d'oxydes d'alumine, de fer et de vanadium, soit sur une zéolithe échangée au cuivre, soit encore sur un catalyseur supporté à base de platine. L'ammoniac de réduction provient d'une partie de l'air de stripping qui court-circuite le réacteur de combustion.

L'élimination des mercaptans ou de leurs sels de bases fortes sous forme de disulfures est pratiquée depuis plus de 30 ans dans certains procédés d'adoucissement des coupes pétrolières légères. Pour sa part, l'IFP a développé divers catalyseurs et procédés dans ce domaine qui ont donné lieu aux brevets français FR-B-2 591 610, FR-B-2 619 822, FR-B-2 635 111 et EP-B-213 026.

Quant à la combustion catalytique des C.O.V. contenus dans l'air de barbotage, c'est une réaction connue et utilisée dans l'élimination de polluants dans les gaz de combustion industriels, les gaz d'échappement automobiles ainsi que les effluents des procédés d'oxydation. Il reste à sélectionner le catalyseur le mieux adapté pour traiter les effluents obtenus dans le cas particulier qui fait l'objet de la présente invention.

La réduction des oxydes d'azote par l'ammoniac sera réalisée en faisant réagir les composés issus de l'étape de combustion catalytique avec un gaz réducteur contenant de l'ammoniac obtenu en déroutant la quantité stoechiométriquement nécessaire du gaz strippé en by-pass de la combustion catalytique. De nombreux catalyseurs ont été décrits dans la littérature et sont aujourd'hui dans le domaine public, qu'il s'agisse des catalyseurs à base de métaux précieux dont le Pt ou ceux à base d'oxydes dont les oxydes de fer et de vanadium.

L'invention concerne un procédé en 3 étapes permettant de traiter les lisiers de porcs de manière à les rendre à la fois moins malodorants et moins polluants au moment de leur épandage. Cet enchaînement d'étapes spécifiques permet d'éliminer ou de bloquer la majeure partie des mercaptans, de stripper et de brûler une partie des composés organiques volatils ainsi qu'une partie de l'ammoniac libre en CO2 et NOx respectivement puis de réduire les oxydes d'azote en azote moléculaire. L'énergie dégagée dans les réactions de combustion peut être utilisée pour la production d'eau chaude sur le site.

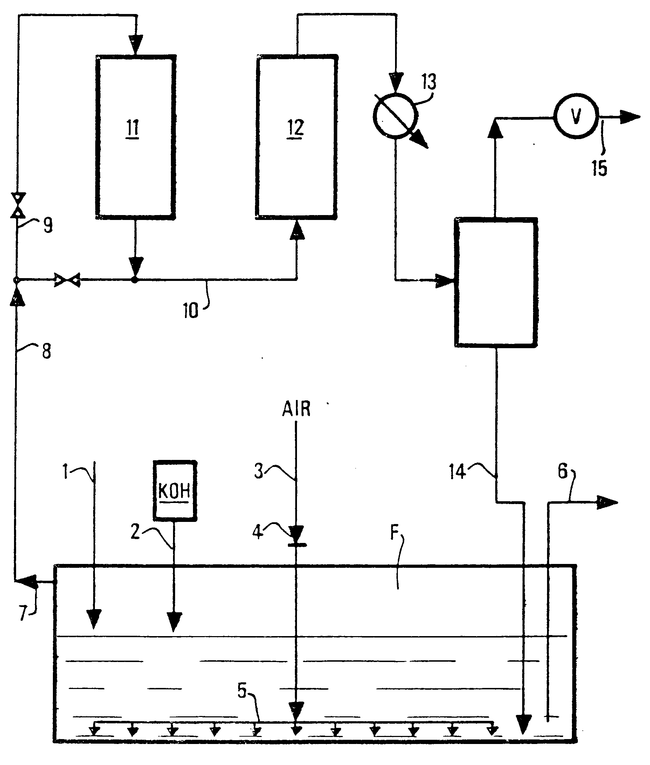

Un schéma succinct du procédé en ses diverses étapes est présenté dans la figure 1. Dans la fosse F où le lisier est introduit par la ligne 1, on ajoute la solution de potasse-hydroxyde ou carbonate, par la ligne 2. Un prélèvement d'air est effectué par la ligne 3, via le clapet anti-retour 4. L'air barbote en phase liquide au travers de la rampe 5. Le lisier traité s'évacue par la ligne 6. L'air après barbotage chargé de gaz ammoniac et de composés organiques volatils s'évacue à partir de l'évent 7 par la ligne 8 jusqu'au manifold (ou conduite) 9. Une partie du gaz entre 30 et 70 % passe sur le réacteur 11 où l'ammoniac est transformé en oxyde d'azote et les C.O.V. (Composés Organiques Volatils) en CO2. L'autre moitié de l'effluent court-circuite (10) ce premier réacteur et est mélangé aux gaz de combustion chauds avant de passer dans un deuxième réacteur catalytique (12) où l'ammoniac et les C.O.V. réduisent les oxydes d'azote en azote moléculaire tandis que les COV sont transformés en CO2. Les vapeurs sont refroidies (13) puis condensées. Les condensats aqueux qui contiennent des oxydes de soufre dont SO₃ sont recyclés dans la fosse (14) où ils sont neutralisés par la potasse et l'ammoniac. Les gaz issus de la condensation sont rejetés à l'atmosphère (15). La circulation d'air peut s'opérer soit par un ventilateur V à l'entrée du circuit, soit à la sortie (15).

L'oxydation des mercaptans en disulfures s'opère en milieu basique à température ordinaire, la basicité étant de préférence apportée par ajout de potasse ou de carbonate de potassium à raison de 1/1000 à 1/100 mole/l. Les catalyseurs utilisés peuvent être des complexes métalliques de la famille des phtalocyanines, préférentiellement le fer, soit rendus solubles par sulfonation, soit insolubles mais déposées sur du carbone activé qui exerce un effet cocatalytique sur la transformation des mercaptans en disulfures.

Parmi les autres catalyseurs qui activent cette oxydation sélective des mercaptans, citons également des dérivés tanniques en présence de sels de fer [1-(2 Thiazolylazo)]-2-napthol et analogues phénoliques diversement substitués. Certains composés minéraux dérivés de la sodalite manifestent également une bonne activité catalytique dans la mesure où ils ont été traités à haute température en présence de sulfure de sodium (bleu d'outre-mer).

Le catalyseur de combustion peut être à base de métaux précieux à très faibles teneurs promus ou non par du cuivre, du fer, des terres rares. Des catalyseurs plus communs à base d'oxyde de cobalt, de manganèse, de vanadium peuvent être également utilisés mais à des températures supérieures de 100 à 150°C, c'est-à-dire à partir de 400° C au lieu de 250-300° C pour les métaux précieux. Le réacteur doit donc être préalablement.chauffé pour que la réaction de combustion puisse se déclencher. Une fois la réaction amorcée, I'exothermicité liée à la combustion de l'ammoniac et des COV permet d'arrêter le préchauffage. La vitesse spatiale est comprise entre 10 000 et 100 000 h⁻¹ et de préférence entre 20 000 et 50 000 h-¹ c'est-à-dire entre 20 000 et 50 000 litre de gaz total par litre de catalyseur et par heure.

Le catalyseur de réduction des oxydes d'azote en azote moléculaire peut également être à base de platine ou palladium déposé sur support réfractaire ou de préférence à base d'oxydes de vanadium stabilisé par des oxydes de métaux du groupe VIII, moins sensible à la présence du soufre.

L'opération de réduction s'opère à des températures comprises entre 250 et 550° C de préférence entre 400 et 450° C à des vitesses spatiales globales comprises entre 5 000 et 50 000 h⁻¹ (l.de gaz total/l cat.. heure) et de préférence entre 15 000 et 30 000 h⁻¹.

Les catalyseurs solides sont disposés dans les réacteurs de manière à créer la plus petite perte de charge possible pour diminuer la puissance des équipements de circulation d'air. Les lits envisagés peuvent donc être radiaux (réacteur 11) ou axiaux (réacteur 12) ; dans le cas de réacteurs axiaux, on pourra avantageusement disposer le catalyseur dans des enveloppes en acier inoxydable (tétraèdes, cylindres) qui seront entassés dans le réacteur qui sera opéré à flux ascendants pour réduire la possibilité de colmatages et surtout pour faciliter les décolmatages éventuels par un simple lavage à l'eau.

### Exemple 1

Sur une citerne de lisier de 1 m³ prélevé sur un stockage réel démarré 4 mois auparavant, on réalise la série d'opérations de la figure 1 sous un débit horaire de 1 m³ d'air. On ajoute au milieu à traiter 0,5 Kg de potasse solide et 10 g de phtalocyanine de fer. On maintient le débit d'air pendant 1 heure. A la sortie de la citerne, l'effluent pour 60 % (620 l/h) passe dans le réacteur 11 et pour 40 % (410 l/h) le court-circuite. Le catalyseur est un catalyseur à base de palladium (0,3 %) déposé sur une alumine stabilisée de type gamma tétragonale ayant une surface de 65 m2/g et une porosité de 0,65 cm³/g. Il se présente sous la forme de billes de 0,3 cm de diamètre. Le réacteur est chargé d'un lit axial de 0,05 l de catalyseur opérant à 330° C.

Dans le deuxième réacteur est chargé un lit également axial de catalyseur à base de vanadium (ex-sulfate de vanadyle) et de 3 % d'oxyde de fer (ex-nitrate ferrique) déposé sur un support à base d'alumine tétragonale offrant une surface spécifique de 54 m²/g et un volume poreux de 0,7 cm³/g. La réaction est réalisée à 430° C.

Le tableau 1 - colonne I - donne les analyses de la phase liquide au départ de l'opération. A l'issue de l'heure de barbotage, on observe, en phase liquide, une élimination quasi complète des mercaptans et ions mercaptides transformés en disulfures ainsi qu'un stripping de l'ammoniac, du méthane et d'une faible proportion de composés organiques volatils en phase gazeuse, tandis que les acides organiques et les phénols réagissent partiellement avec la potasse (colonne II). A l'issue de cette première étape, on observe une forte diminution de l'odeur du produit liée à l'élimination des mercaptans et de l'ammoniac qui sont les composés les plus volatils ayant des indices de reconnaissance parmi les plus élevés (en vpm).

Les composés organiques plus lourds n'entrent pas dans ces analyses de la phase liquide ; la plupart, tels les méthyl-indoles sont très peu solubles dans l'eau et peu entraînés hors du stockage lors du barbotage de l'air.

A la sortie de la première étape, le flux gazeux était divisé en deux parties : 54 % de ce flux passait dans le réacteur de combustion, 46 % étaient directement ajoutés sur le lit catalytique de réduction des oxydes d'azote. Les résultats globaux sont présentés dans le tableau 2 (colonne II). Dans une deuxième approche, 60 % du flux réducteur a été amené à court-circuiter le réacteur d'oxydation. L'augmentation du flux réducteur a permis de réduire les rejets d'oxyde d'azote, mais aux dépens des rejets de produits réducteurs (colonne III).

Les chiffres présentés dans le tableau 2 sont les valeurs moyennes obtenues sur toute la durée de l'opération, c'est-à-dire 1 h.

### Exemple 2

On opère dans les mêmes conditions que dans l'exemple 1, avec un échantillon de lisier prélevé sur le même stock. Les seules différences avec l'essai de l'exemple 1 sont les suivantes :
- le catalyseur est un mélange mécanique de poudre de charbon activé imprégné de phtalocyanines de fer et de cobalt insolubles et de poudre de bleu d'outremer. Le charbon de même que le bleu d'outremer (sodalite + sulfure de sodium) avaient une granulométrie comprise en 10 et 100 m. La surface du charbon était de 530 m²/g. Le poids de charbon était de 200 g et celui de sodalite de 150 g..
   Toutes autres conditions restant identiques,
- les deux autres étapes de combustion et de réduction des oxydes d'azote étaient réalisées sur les mêmes catalyseurs, dans les conditions de la 1ère approche de l'essai 1 (flux de réduction/flux total = 0,46). Cependant, après refroidissement, les effluents gazeux étaient amenés à barboter dans une solution de potasse N/2 destinée à être injectée dans le produit à traiter dans une opération ultérieure.
- la quantité de potasse ajoutée au mélange à traiter était de 2,8 Kg/m³,
- les gaz issus du réacteur de réduction barbotaient pendant les 2 h de l'essai dans un extracteur contenant 100 litres d'eau et 2,8 Kg/m³ de potasse fraîche.

Les résultats correspondant à cette deuxième série d'essais sont présents dans le tableau 1, colonne III et dans le tableau 2 colonne IV. On constate, comme dans le premier exemple, la disparition des composés soufrés salifiables et à la sortie de l'ensemble des opérations, I'élimination quasi complète des diverses impuretés la solution de potasse retient une grande partie des rejets, avec formations de sels : sulfates, sulfites, nitrates, nitrites et pour l'essentiel bicarbonate de potasse. La majeure partie de la potasse reste cependant sous forme libre.

### Exemple 3

On délite 280 Kgs de fientes de volailles dans de l'eau jusqu'à obtenir 1 m³ de mélange que l'on traite dans les conditions de l'exemple 2, hormis le rapport flux de réduction des NOx/flux total qui est ajusté de manière à minimiser la teneur des impuretés dans l'air rejeté. Dans cet essai, cet optimum est égal à 0,43 et pour cette valeur, le mélange a perdu la majeure partie de son odeur ammoniaquée et les rejets ne contiennent que des traces d'ammoniaque et d'oxydes d'azote transformés en azote moléculaire ou retenus par la solution de potasse servant au lavage ultime.

**Tableau n° 1**

| **PREMIERE ETAPE : Impuretés dans la phase liquide décantée** | | | |
|---|---|---|---|
| **Teneur** ***en Kg/m3*** | Lisier non traité | Lisier traité (Ex. 1) | Lisier traité (Ex. 2) |
| | **I** | **II** | **III** |
| Méthane | 1 | 0,1 | 0,13 |
| Ammoniac | 1,7 | 0,17 | 0,18 |
| Diméthyl-amine | 2,3 | 0,44 | 0,5 |
| Triméthyl-amine | 3 | 0,33 | 0,39 |
| Indoles | 2,5 | 2,5 | 2,5 |
| Hydrogène sulfuré | 0,5 | 0,05 | 0,05 |
| Mercaptans | 0,7 | 0 | 0 |
| Sulfures | 0,6 | 0,47 | 0,5 |
| Disulfures | 0,3 | 0,75 | 0,83 |
| Acide Acétique | 0,5 | 0,5 | 0,5 |
| Acide Butyrique | 0,5 | 0,48 | 0,5 |
| Phénols | 0,8 | 0,8 | 0,8 |

**Tableau n° 2**

| **ETAPES II & III : Elimination des C.O.V. et de l'Azote** | | | | |
|---|---|---|---|---|
| **Teneur** ***en g/m3 d'air traité*** | Entrée réacteur d'oxydation (9) | Sortie de réacteur de réduction des NOx (12) | | |
| | **I** | **II** | **III** | **IV** |
| Méthane | 900 | 45 | 80 | 40 |
| Ammoniac | 1530 | 2,5 | 6,5 | < 2 |
| Σ Amines | 4500 | 9 | 25 | < 1 |
| Hydrogène sulfuré | 630 | < 1 | < 1 | < 1 |
| Σ Sulfures | 350 | non | dosable | - |
| NOx | | 390 | 190 | < 10 |
| SOx | | 175 | 180 | < 10 |

Ainsi l'invention concerne un procédé d'élimination de l'hydrogène sulfuré, mercaptans et composés organiques azotés volatils selon un processus en plusieurs étapes :
- oxydation des mercaptans en disulfures et transformation de l'hydrogène sulfuré en composés sulfurés, en présence d'air, d'une base forte et de catalyseurs spécifiques.
- Post combustion catalytique des composés organiques volatils entraînés dans l'air d'oxydation dont I'ammoniac et certaines amines légères sur une partie du flux compris entre 30 et 70 % et de préférence entre 50 et 65 %.
- Réduction catalytique des oxydes d'azote par l'ammoniac et les réducteurs aminés provenant du flux complémentaire non soumis à la combustion.
De préférence les conditions opératoires de l'étape 1 sont les suivantes :
- **T** ordinaire
- **P** ordinaire
   - - **débit air** :: 0,5 à 5 m3/m3h de liquide - de préférence 1 à 2 m³/m³.h)
   - - **Catalyseurs** :: - phtalocyanines solubles (sulfonées de métaux de transition Co et Fe.
   - phtalocyanines insolubles déposées sur C actif (200 à 1200 m²/g)
   - concentration de phtalocyanine : 10 à 200 ppm rapportée au volume liquide à traiter. Sur charbon : 5 à 100 ppm déposés à raison de 3 à 5 % sur le charbon par imprégnation à sec en milieu crésol.
   - bleu d'outremer de 5 à 100 g par m3 de produit à traiter ; de préférence de 10 à 50 g.

De préférence les conditions opératoires de l'étape 2 sont les suivantes : le catalyseur renferme au choix :
a) - Pt ou Pd sur réfractaire, silice zircone, silice alumine, alumine stabilisée, terres naturelles du type seprolite, atlapulgite, zéolite y ou mordénite à raison de 2 g de métal par litre de catalyseur. Le catalyseur peut avantageusement être promu par des métaux du groupe I B de la classification périodique (Au, Ag, Cu) et par des oxydes de terres rares et de fer.
b) - oxydes de métaux de transition, Fe, Co, Mn, V, W, seuls ou en mélange
   T : 250 à 550° C, de préférence
   **P** : atmosphérique
   **VVH** : entre 10 000 et 100 000 m³ de flux gazeux par m³ de catalyseur et par heure,
      et de préférence entre 20 000 et 50 000 h⁻¹.

De préférence les conditions opératoires de l'étape 3 (réduction des oxydes d'azote) sont les suivantes :
**Catalyseurs** : (Pt et Rh), ou de préférence de l'oxyde de vanadium stabilisé par des oxydes de titane, de fer et de cobalt.
**T** : entre 250 et 550° C, de préférence entre 400 et 450° C
**P** : ordinaire
**VVH** : 5 000 à 50 000 h⁻¹, de préférence entre 15 000 et 30 000 h⁻¹.

De préférence, les lits de catalyseur de combustion et de réduction sont radiaux pour réduire la perte de charge.

Dans le cas des lits de catalyseur axiaux, ceux-ci sont à courants ascendants mais le catalyseur est inséré dans des volumes de 5 à 10 cm³ pour réduire les pertes de charge et surtout leur croissance au cours du temps. Cet agencement permet un rinçage périodique des lits catalytiques.

De façon préférée, les gaz issus de l'étape de réduction des oxydes d'azote barbotent dans la solution de potasse destinée à alimenter le premier réacteur de manière à limiter la production des oxydes d'azote et de soufre.

Dans une méthode préférée, la potasse de la première étape est remplacée par de la soude ou de l'hydroxyde de lithium.

La solution de barbotage finale peut être à base de soude ou d'une suspension de lait de chaux.

Le procédé selon l'invention est appliqué aux lisiers de porc mais également à d'autres effluents malodorants chargés en ammoniac dans la mesure où ils sont préalablement mis en suspension dans l'eau : fientes de volailles et autres déjections animales, eaux usées diverses etc.

Les opérations de désodorisation et d'élimination des composés azotés volatils peuvent être réalisées par exemple en continu ou de préférence périodiquement.

## Revendications

1. Procédé d'élimination de l'hydrogène sulfuré, mercaptans et composés organiques azotés volatils selon un processus en trois étapes :
(a) • oxydation des mercaptans en disulfures et transformation de l'hydrogène sulfuré en composés sulfurés, en présence d'air, d'une base forte et de catalyseurs spécifiques.
(b) • post combustion catalytique des composés organiques volatils entraînés dans l'air d'oxydation dont l'ammoniac et certaines amines légères sur une partie du flux compris entre 30 et 70 % et de préférence entre 50 et 65 %.
(c) • réduction catalytique des oxydes d'azote par l'ammoniac et les réducteurs aminés provenant du flux complémentaire non soumis à la combustion.

2. Procédé selon la revendication 1 dans lequel les conditions opératoires de l'étape 1 sont les suivantes :
- **T** ordinaire
- **P** ordinaire
- **débit air** : 0,5 à 5 m³/m³h de liquide - de préférence 1 à 2 m³/m³.h)
- Catalyseur choisi dans le groupe constitué par :
- phtalocyanines solubles (sulfonées de métaux de transition Co et Fe.
- phtalocyanines insoblubles déposées sur charbon actif (200 à 1200 m²/g)
- bleu d'outremer de 5 à 100 g par m³ de produit à traiter ; de préférence de 10 à 50 g.

3. Procédé selon la revendication 1 dans lequel les conditions opératoires de l'étape 2 sont les suivantes :
Catalyseur choisi parmi :
a )- Pt ou Pd sur réfractaire, silice zircone, silice alumine, alumine stabilisée, terres naturelles du type seprolite, atlapulgite, zéolite y ou mordénite à raison de 2 g de métal par litre de catalyseur, le catalyseur étant avantageusement promu par des métaux du groupe II B de la classification périodique (Au, Ag, Cu) et par des oxydes de terres rares et de fer.
et
b) - oxydes de métaux de transition, Fe, Co, Mn, V, W, seuls ou en mélange
T : 250 à 550° C de préférence
P : atmosphérique
VVH : entre 10 000 et 100 000 m³ de flux gazeux par m³ de catalyseur et par heure, et de préférence entre 20 000 et 50 000 h⁻¹.

4. Procédé selon la revendication 1 dans lequel les conditions opératoires de l'étape 3 : (réduction des oxydes d'azote) sont les suivantes :
Catalyseurs : soit Pt + Rh, soit de préférence oxyde de vanadium stabilisé par des oxydes de titane, de fer et de cobalt.
**T** : entre 250 et 550° C, de préférence entre 400 et 450° C
**P** : ordinaire
**VVH** : 5 000 à 50 000 h⁻¹, de préférence entre 15 000 et 30 000 h⁻¹.

5. Procédé selon l'une des revendications 1 à 4 dans lequel les lits de catalyseur de combustion et de réduction sont radiaux pour réduire la perte de charge.

6. Procédé selon l'une des revendications 1 à 4 dans lequel les lits de catalyseur axiaux sont à courants ascendants, le catalyseur étant inséré dans des volumes de 5 à 10 cm³ pour réduire les pertes de charge et surtout leur croissance au cours du temps.

7. Procédé selon l'une des revendications 1 à 6 dans lequel les gaz issus de l'étape de réduction des oxydes d'azote barbotent dans la solution de potasse destinée à alimenter le premier réacteur de manière à limiter la production des oxydes d'azote et de soufre.

8. Procédé selon la revendication 7 dans lequel la potasse de la première étape est remplacée par de la soude ou de l'hydroxyde de lithium.

9. Procédé selon l'une des revendications 1 à 8 appliqué au traitement des lisiers de porc.

10. Procédé selon l'une des revendication 1 à 8 appliqué au traitement des effluents malodorants chargés en ammoniac (dans la mesure où ils sont préalablement mis en suspension dans l'eau) tels que fientes de volailles et autres déjections animales, eaux usées diverses.

11. Procédé selon l'une des revendications 1 à 10 dans lequel les opérations de désodorisation et d'élimination des composés azotés volatils sont réalisées en continu ou de préférence périodiquement.

## Claims

1. Process for the elimination of hydrogen sulphide, mercaptans and volatile organic nitrogen compounds, the process comprising three steps:
(a) Oxidation of the mercaptans into disulphides and transformation of the hydrogen sulphide into sulphided compounds, in the presence of air and of a strong base and specific catalysts,
(b) catalytic post combustion of the volatile organic compounds entrained in the oxidizing air, namely ammonia and certain light amines, in a proportion of between 30 % and 70 %, preferably between 50 % and 65 %, of the flux
(c) catalytic reduction of the nitrogen oxides by ammonia and the reducing amines from the complementary portion of the flux which is not submitted to combustion.

2. Process according to claim 1 wherein the operating conditions in step 1 are as follows:
- T : normal
- P : normal
- air flow rate : 0.5 to 5 m³/m³.h of liquid, preferably 1 to 2 m³/m³.h,
- catalyst selected from the group constituted by:
- soluble phthalocyanines (sulphonated with transition metals Co and Fe),
- insoluble phthalocyanines deposited on activated carbon (200 to 1200 m²/g),
- cobalt blue in a concentration of 5 to 100 g per m³ of product to be treated; preferably 10 to 50 g.

3. Process according to claim 1 wherein the operating conditions in step 2 are as follows: catalyst selected from:
a) Pt or Pd on refractory silica zirconia, silica alumina, stabilised alumina, sepiolite, atlapulgite, zeolite Y or mordenite type natural earths in a concentration of 2 g of metal per litre of catalyst, the catalyst advantageously containing group IB metal promoters from the periodic classification (Au, Ag, Cu) and by rare earth and iron oxides,
b) Fe, Co, Mn, V or W transition metal oxides, alone or as a mixture,
T : preferably 250°C to 550°C,
P : atmospheric
VVH : between 10 000 and 100 000 m³ of gaseous flux per m³ per hour, preferably between 20 000 and 50 000 h⁻¹.

4. Process according to claim 1 wherein the operating conditions in step 3 (reduction of nitrogen oxides) are as follows:
catalysts : Pt + Rh, or preferably vanadium oxide stabilised with titanium, iron and cobalt oxides,
T : between 250°C and 550°C, preferably between 400°C and 450°C,
P : normal
VVH : 5 000 to 50 000 h⁻¹, preferably between 15 000 and 30 000 h⁻¹.

5. Process according to any one of claims 1 to 4 wherein the combustion and reduction catalyst beds are radial to reduce pressure drops.

6. Process according to any one of claims 1 to 4 wherein the axial catalyst beds are in ascending current mode, the catalyst being packed in 5 to 10 cm³ volumes to reduce pressure drops, in particular the increase thereof with time.

7. Process according to any one of claims 1 to 6 wherein the gases from the reduction step for the nitrogen oxides are bubbled into the caustic potash solution which feeds the first reactor to limit the production of nitrogen oxides and sulphur.

8. Process according to claim 7 wherein the caustic potash from the first step is replaced by caustic soda or lithium hydroxide.

9. Process according to any one of claims 1 to 8 applied to treatment of liquid pig manure.

10. Process according to any one of claims 1 to 8 applied to the treatment of other objectionable ammonia-laden effluents (provided that they are initially suspended in water), for example poultry droppings and other animal excrement, and various waste waters.

11. Process according to any one of claims 1 to 10 wherein the operations of deodorization and volatile nitrogen compound elimination are carried out in continuous mode or, preferably, batchwise.

## Patentansprüche

**1.** Verfahren zur Entfernung von Schwefelwasserstoff, Merkaptanen und flüchtigen organischen Stickstoffverbindungen nach einen Dreistufenverfahren:
(a) Oxidation der Merkaptane in Disulfide und Überführung von Schwefelwasserstoff in Schwefelverbindungen in Gegenwart von Luft, einer starken Base und von spezifischen Katalysatoren;
(b) katalytische Nachverbrennung der mit der Oxidationsluft mitgeführten flüchtigen organischen Verbindungen, von denen Ammoniak und bestimmte niedrige Amine in einem Teil des Stromes zwischen 30 und 70 %, und vorzugsweise zwischen 50 und 65 %, umfassen;
(c) katalytische Reduktion der Stickoxide durch Ammoniak und reduzierende Amine, die aus einem Komplementärstrom stammen, der keiner Verbrennung unterworfen wurde.

**2.** Verfahren nach Anspruch 1, dadurch gekennzeichnet, daß die Betriebsbedingungen in Stufe 1 die folgenden sind:
- normale Temperatur
- normaler Druck
- Luftdurchsatz: 0,5 bis 5 m³/m³h Flüssigkeit (vorzugsweise 1 bis 2 m³/m³h)
Katalysator ausgewählt aus der Gruppe bestehend aus:
- lösliche Phtalocyanine (sulfoniert, von den Übergangsmetallen Co und Fe)
- an Aktivkohle abgelagerte unlösliche Phtalocyanine (200 bis 1200 m²/g)
- Ultramarin, 5 bis 100 g pro m³ zu behandelndes Produkt; vorzugsweise 10 bis 50 g.

**2.** Verfahren nach Anspruch 1, dadurch gekennzeichnet, daß die Betriebsbedingungen in Stufe 2 die folgenden sind: Katalysator ausgewählt aus:
(a) Pt oder Pd auf Feuerfestmaterial, Siliciumoxid-Zirconiumoxid, Siliciumoxid-Aluminiumoxid, stabilisiertes Aluminumoxid, natürliche Tone vom Typ Seprolit, Atapulgit, Zeolith oder Mordernit mit einem Verhältnis von 2 g Metall pro l Katalysator, wobei der Katalysator vorteilhafterweise ausgewählt aus den Metallen der Gruppe IIB des periodischen Systems (Au, Ag, Cu) und unter den Oxiden der Seltenerdmetallen und von Eisen; und
(b) Oxide der Übergangsmetalle, Fe, Co, Mn, V, W, allein oder Mischung;
T: vorzugsweise 250 bis 550 °C;
P: Atmosphärendruck
VVH: zwischen 10000 und 100000 m³ Gasstrom pro m³ Katalysator und pro Stunde, und vorzugsweise zwischen 20000 und 50000 h⁻¹.

**4.** Verfahren nach Anspruch 1, dadurch gekennzeichnet, daß die Betriebsbedingungen der Stufe 3 (Reduktion der Stickstoffoxide) die folgenden sind:
Katalysatoren: entweder Pt + Rh, oder vorzugsweise Vanadiumoxid, stabilisiert durch Oxide von Titan, Eisen und Kobalt.
T: zwischen 250 und 550 °C, und vorzugsweise zwischen 400 und 450 °C
P: Normaldruck
VVH: 5000 bis 50000 h⁻¹, und vorzugsweise zwischen 15000 und 30000 h⁻¹.

**5.** Verfahren nach einem der Ansprüche 1 bis 4, dadurch gekennzeichnet, daß die Katalysatorbetten für die Verbrennung und Reduktion radial angeordnet sind, um den Druckverlust zu verringern.

**6.** Verfahren nach einem der Ansprüche 1 bis 4, dadurch gekennzeichnet, daß die achsialen Katalysatorbetten ansteigend angeordnet sind, wobei der Katalysator in einem Volumen von 5 bis 10 cm³ eingebracht wird, um den Druckverlust und insbesondere ihr Wachstum im Laufe der Zeit zu verringern.

**7.** Verfahren nach einem der Ansprüche 1 bis 6, dadurch gekennzeichnet, daß das aus der Stufe der Reduktion der Stickoxide austretende Gas durch die Kalilösung strömt, die für die Belieferung des ersten Reaktors bestimmt ist, um die Produktion von Oxiden des Stickstoffs und des Schwefels zu begrenzen.

**8.** Verfahren nach Anspruch 7, dadurch gekennzeichnet, daß das Kali der ersten Stufe durch Natrium- oder Lithiumhydroxid ersetzt ist.

**9.** Verfahren nach einem der Ansprüche 1 bis 8, dadurch gekennzeichnet, daß man es zur Behandlung von Schweinegülle verwendet.

**10.** Verfahren nach einem der Ansprüche 1 bis 8 zur Behandlung von Ammoniak enthaltenden schlechtriechenden Ausscheidungen (unter der Voraussetzung, daß sie vorher in eine Suspension in Wasser gebracht wurden), wie z.B. Geflügeldreck und anderen tierischen Ausscheidungen, und verschiedenen Abwässern.

**11.** Verfahren nach einem der Ansprüche 1 bis 10, dadurch gekennzeichnet, daß die Desodorierung und die Entfernung flüchtiger Stickstoffverbindungen kontinuierlich und vorzugsweise diskontinuierlich durchgeführt wird.
